(19) Europäisches Patentamt
European Patent Office
Office européen des brevets

(11) **EP 2 624 137 B1**

(12) **EUROPEAN PATENT SPECIFICATION**

(45) Date of publication and mention
of the grant of the patent:
**13.05.2020 Bulletin 2020/20**

(51) Int Cl.:
***G06F 9/50*** *(2006.01)*    ***G06F 12/02*** *(2006.01)*

(21) Application number: **13152629.5**

(22) Date of filing: **25.01.2013**

(54) **A method and a device for controlling memory allocation**

Verfahren und Vorrichtung zur Speicherzuweisungssteuerung

Procédé et dispositif permettant de commander l'attribution de mémoire

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **03.02.2012  FI 20125118**

(43) Date of publication of application:
**07.08.2013  Bulletin 2013/32**

(73) Proprietor: **Coriant Oy**
**02630 Espoo (FI)**

(72) Inventors:
• **Hallivuori, Ville**
  **02610 Espoo (FI)**
• **Kuusisaari, Juhamatti**
  **00680 Helsinki (FI)**

(74) Representative: **Finnpatent Oy**
**Smart Chemistry Park**
**Raisionkaari 55**
**21200 Raisio (FI)**

(56) References cited:
**EP-A1- 2 075 698      WO-A2-02/31660**
**US-A- 5 784 698      US-A- 5 875 477**
**US-A1- 2005 132 162**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## EP 2 624 137 B1

**Description**

**Field of the invention**

The invention relates to a method and to a device for controlling allocation of memory blocks of a memory organized to contain a plurality of memory block groups each of which containing a plurality of memory blocks. Furthermore, the invention relates to a computer program for controlling allocation of memory blocks of a memory.

**Background**

In many electronic devices which comprise a memory and a processor there is a need to allocate parts of the memory for some purposes of use, and later release the allocated parts when they are no more needed for these purposes of use. Network elements such as routers, switches, and bridges are examples of electrical of devices of the kind mentioned above. A network element receives data frames, stores and processes the received data frames, and finally forwards the data frames to data transfer links which connect the network element to other network elements. Many network elements comprise one or more such memories which are organized to contain a plurality of memory block groups each of which containing a plurality of memory blocks. A single memory block can be allocated, for example, for storing a data frame, or a part of it, which is queuing up for being processed or forwarded. A process that controls the allocation of the memory blocks receives, from another process that uses the memory, a request to allocate one or more memory blocks and, in response to this request, returns one or more addresses which identify the allocated one or more memory blocks. When the allocated memory blocks are no more needed, the process using the memory returns one or more addresses which identify the memory blocks that can be released to wait for further use. The process for controlling the allocation of the memory blocks is frequently in use, and thus the process should be such that a cache memory is effectively utilized. In typical methods for controlling the memory allocation, this is however not the case because pointers which indicate the locations of free and allocated memory blocks are situated in conjunction with the memory blocks, and thus these pointers are located in a distributed way in the address space of the memory. Therefore, data items which are used in successive allocation or releasing operations can be located relatively far from each other in the address space. Thus, it is typical that the cache memory contains data which is used only once or twice and, before the next usage of this data, a lot of other data is used and loaded to the cache memory and therefore the first mentioned data may be dropped out from the cache memory before its next usage. As a corollary, the cache memory is not effectively utilized.

US 5784698 A discloses a method to allocate memory areas into free buffer pools. Each buffer pool has an identical buffer sized buffer storage area. Each succeeding buffer pool has a larger buffer size than the preceding buffer pool. A selection size parameter which is larger than the buffer size is associated to each buffer pool. When a request for allocation of buffer space is received, a buffer with selection size parameter that is next larger than the allocation request is allocated. The buffer control block (BCB) is allocated under control from the control memory, with each BCB having an associated data structure, a pointer to the next BCB and a buffer address. Based on the allocated buffer size and the requested buffer space an unfulfilled buffer space is determined. Based on the unfulfilled buffer space, a buffer from a free buffer pool memory whose selection size parameter has a larger value than the selection size parameter of the unfulfilled amount is allocated. The procedure is repeated until there is no unfulfilled amount of requested buffer space.

US 2005/132162 A1 discloses determining, in response to a memory allocation request, whether the memory allocation is to be maintained when subsequently initializing memory in a special rest mode, and memory allocation information is saved to maintain the memory allocation during subsequently initializing the memory.

EP 2075698 A1 discloses allocating memory for a set of memory pools and dividing each memory pool into a set of memory blocks of size specific to one of the resource types, where the resource types are related to communication managed by a broker system. The allocation of memory for a memory pool is requested by threads or tasks of the broker system using a ticket system performed by a dedicated thread or a dedicated task. Memory of the memory pool is dynamically deallocated when the memory pool is not used.

WO 02/31660 A2 discloses a data storage space with a first data array which, for each of one or more-cell sizes, stores data indicating whether or not the data storage space includes at least one cell of a certain type and of the respective size. A second data array which, for any the size for which at least one cell of the determined type exists, indicates a location of at least one cell of that size and type within the data storage space.

US 5875477 A discloses a primary logical identifier and a secondary logical identifier comprising redundant information for the former are stored in a partitioned memory, that is identified based on requested partition number. A partition of stored data is located and identified using a pair of stored logical identifiers formed from respective portions of both the primary and secondary logical identifiers, respectively

2

# EP 2 624 137 B1

## Summary

The following presents a simplified summary in order to provide a basic understanding of some aspects of various invention embodiments. The summary is not an extensive overview of the invention. It is neither intended to identify key or critical elements of the invention nor to delineate the scope of the invention. The following summary merely presents some concepts of the invention in a simplified form as a prelude to a more detailed description of exemplifying embodiments of the invention.

In accordance with the first aspect of the invention there is provided a new device for controlling a memory organized to contain a plurality of memory block groups each of which containing a plurality of memory blocks. The device according to the invention comprises a processor configured to:

- maintain a first data entity containing first data items so that there is a first data item for each of the memory block groups, each of the first data items indicating how many free memory blocks there are in the memory block group related to this first data item, and
- maintain second data entities so that there is a second data entity for each of the memory block groups and each of the second data entities contains second data items so that the number of the second data items in each second data entity is at least the number of the memory blocks in the memory block group related to this second data entity, and, when one or more of the memory blocks of the memory block group related to this second data entity are free, one or more of the second data items of this second data entity contain indicators identifying the free memory blocks from among all the memory blocks of the memory block group related to this second data entity.

The processor is further configured to carry out the following actions in response to receiving a request to allocate a free memory block:

- searching, from the first data entity, such a first data item that indicates that there are one or more free memory blocks in the memory block group related to this first data item,

- selecting, from among the second data entities, such a second data entity which is related to the memory block group related to the searched first data item,

- selecting, from the selected second data entity, such a second data item which carries an indicator of a free memory block,

- forming an address identifying the free memory block to be allocated at least partly on the basis of (i) the searched first data item which indicates the memory block group having at least one free memory block and (ii) the indicator of the free memory block, and

- updating the searched first data item to correspond to a situation in which the number of free memory blocks in the memory block group related to the searched first data item has decreased by one.

In a device according to an advantageous and exemplifying embodiment of the present invention, the processor is further configured to carry out the following actions in response to receiving an address identifying a memory block to be released from allocation:

- determining the memory block group which contains the memory block to be released,

- updating the first data item related to the determined memory block group by adding one to the number of free memory blocks of the determined memory block group,

- determining an indicator which identifies, from among all the memory blocks of the determined memory block group, the memory block to be released,

- determining, from the second data entity related to the determined memory block group, such a second data item which does not contain an indicator of any other memory block that is free, and

- setting the determined second data item to contain the indicator which identifies, from among all the memory blocks of the determined memory block group, the memory block to be released.

The above-mentioned first data entity that contains the first data items is used in every allocation and releasing operation. Thus, at each allocation or releasing operation, the first data entity can be found from a cache memory with a very high probability. Also the second data entities can be arranged to constitute a compact data set because each second data item can be a data element of only few bits. Hence, at each allocation or releasing operation, also the second data entity relating to the memory block group under consideration can be found from the cache memory with a good probability.

For example, in a case where there are e.g. 48 memory block groups each containing e.g. 15 memory blocks, each first data item can be four bits and also each second data item can be four bits. In this exemplifying case, the size of the first data entity is $48 \times 4$ bits which is 24 bytes, and the size of each second data entity is $15 \times 4$ bits which is less than 8 bytes. In a case where a cache line is e.g. 32 bytes, the first data entity fits in a single cache line and four second data entities fit in a single cache line. The whole data structure, i.e. the first data entity and the 48 second data entities, fits in only 13 cache lines. Thus, cache misses are very improbable in allocation and releasing operations, and therefore the cache memory can be effectively utilized.

In accordance with the second aspect of the invention there is provided a new method for controlling a memory organized to contain a plurality of memory block groups each of which containing a plurality of memory blocks. The method according to the invention comprises:

- maintaining a first data entity containing first data items so that there is a first data item for each of the memory block groups, each of the first data items indicating how many free memory blocks there are in the memory block group related to this first data item, and

- maintaining second data entities so that there is a second data entity for each of the memory block groups and each of the second data entities contains second data items so that the number of the second data items in each second data entity is at least the number of the memory blocks in the memory block group related to this second data entity, and, when one or more of the memory blocks of the memory block group related to this second data entity are free, one or more of the second data items of this second data entity contain indicators identifying the free memory blocks from among the memory blocks of the memory block group related to this second data entity.

The method further comprises carrying out the following actions in response to receiving a request to allocate a free memory block:

- searching, from the first data entity, such a first data item that indicates that there are one or more free memory blocks in the memory block group related to this first data item,

- selecting, from among the second data entities, such a second data entity which is related to the memory block group related to the searched first data item,

- selecting, from the selected second data entity, such a second data item which carries an indicator of a free memory block,

- forming a first address identifying the free memory block to be allocated at least partly on the basis of (i) the searched first data item which indicates the memory block group having at least one free memory block and (ii) the indicator of the free memory block, and

- updating the searched first data item to correspond to a situation in which the number of free memory blocks in the memory block group related to the searched first data item has decreased by one.

A method according to an advantageous and exemplifying embodiment of the present invention further comprises carrying out the following actions in response to receiving an address identifying a memory block to be released from allocation:

- determining the memory block group which contains the memory block to be released,

- updating the first data item related to the determined memory block group by adding one to the number of free memory blocks in the determined memory block group,

- determining an indicator which identifies, from among the memory blocks of the determined memory block group, the memory block to be released,

- determining, from the second data entity related to the determined memory block group, such a second data item which does not contain an indicator of any other memory block that is free, and

- setting the determined second data item to contain the indicator which identifies, from among the memory blocks of the determined memory block group, the memory block to be released.

In accordance with the third aspect of the invention there is provided a new computer program for controlling a memory organized to contain a plurality of memory block groups each of which containing a plurality of memory blocks. The computer program according to the invention comprises computer executable instructions for controlling a programmable processor to:

- maintain a first data entity containing first data items so that there is a first data item for each of the memory block groups, each of the first data items indicating how many free memory blocks there are in the memory block group related to this first data item, and

- maintain second data entities so that there is a second data entity for each of the memory block groups and each of the second data entities contains second data items so that the number of the second data items in each second data entity is at least the number of the memory blocks in the memory block group related to this second data entity, and, when one or more of the memory blocks of the memory block group related to this second data entity are free, one or more of the second data items of this second data entity contain indicators identifying the free memory blocks from among the memory blocks of the memory block group related to this second data entity.

The computer program further comprises computer executable instructions for controlling the programmable processor to carry out the following actions in response to receiving a request to allocate a free memory block:

- searching, from the first data entity, such a first data item that indicates that there are one or more free memory blocks in the memory block group related to this first data item,

- selecting, from among the second data entities, such a second data entity which is related to the memory block group related to the searched first data item,

- selecting, from the selected second data entity, such a second data item which carries an indicator of a free memory block,

- forming a first address identifying the free memory block to be allocated at least partly on the basis of (i) the searched first data item which indicates the memory block group having at least one free memory block and (ii) the indicator of the free memory block, and

- updating the searched first data item to correspond to a situation in which the number of free memory blocks in the memory block group related to the searched first data item has decreased by one.

A computer program according to an advantageous and exemplifying embodiment of the present invention further comprises computer executable instructions for controlling the programmable processor to carry out the following actions in response to receiving an address identifying a memory block to be released from allocation:

- determining the memory block group which contains the memory block to be released,

- updating the first data item related to the determined memory block group by adding one to the number of free memory blocks in the determined memory block group,

- determining an indicator which identifies, from among the memory blocks of the determined memory block group, the memory block to be released,

- determining, from the second data entity related to the determined memory block group, such a second data item which does not contain an indicator of any other memory block that is free, and

- setting the determined second data item to contain the indicator which identifies, from among the memory blocks of the determined memory block group, the memory block to be released.

In accordance with the fourth aspect of the invention there is provided a new computer program product. The computer program product comprises a non-volatile computer readable medium, e.g. a compact disc "CD", encoded with a computer program according to the invention.

A number of exemplifying embodiments of the invention are described in accompanied dependent claims.

Various exemplifying embodiments of the invention both as to constructions and to methods of operation, together with additional objects and advantages thereof, will be best understood from the following description of specific exemplifying embodiments when read in connection with the accompanying drawings.

The verb "to comprise" is used in this document as an open limitation that neither excludes nor requires the existence of also un-recited features. The features recited in depending claims are mutually freely combinable unless otherwise explicitly stated.

## Brief description of the figures

The exemplifying embodiments of the invention and their advantages are explained in greater detail below with reference to the accompanying drawings, in which:

figure 1 shows a schematic illustration of a data structure according to an exemplifying embodiment of the invention for controlling memory allocation,

figure 2 shows a schematic illustration of a device according to an exemplifying embodiment of the invention for controlling memory allocation, and

figure 3 shows a flow chart of a method according to an exemplifying embodiment of the invention for controlling memory allocation.

## Description of the exemplifying embodiments

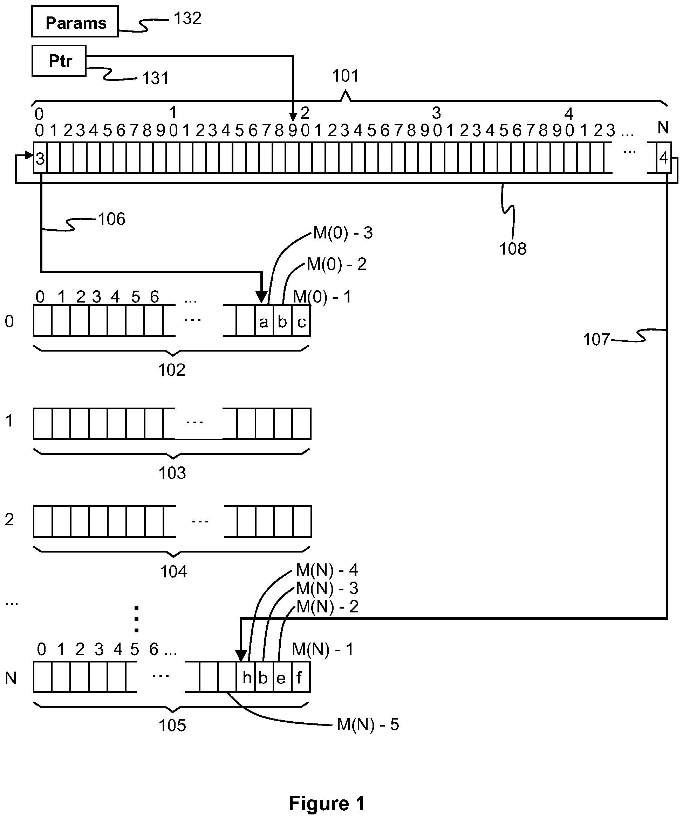

Figure 1 shows a schematic illustration of a data structure according to an exemplifying embodiment of the invention for controlling memory allocation. The memory is organized to contain a plurality of memory block groups each of which containing a plurality of memory blocks. The memory block groups are sometimes called "pipelines". In this exemplifying case, the memory has N+1 memory block groups. The data structure comprises a first data entity 101 that contains first data items so that there is one first data item for each of the memory block groups. Hence, in this exemplifying case, there are N+1 first data items in the first data entity 101. Each of the first data items indicates a number of free memory blocks in the memory block group related to this first data item. In the exemplifying case illustrated in figure 1, there are three free memory blocks in the memory block group related to the first data item '0' and four free memory blocks in the memory block group related to the first data item 'N'.

The data structure comprises N+1 second data entities 102, 103, ..., 105 so that there is one second data entity for each of the N+1 memory block groups. Each of the second data entities contains second data items so that the number of the second data items in each second data entity is at least the number of the memory blocks in the memory block group related to this second data entity. For example, the memory block group related to the first data item '0' and to the second data entity '0' contains $M(0)$ memory blocks and thus the second data entity '0' contains at least $M(0)$ second data items, and correspondingly, the memory block group related to the first data item 'N' and to the second data entity 'N' contains $M(N)$ memory blocks and thus the second data entity 'N' contains at least $M(N)$ second data items. However, it is usually advantageous that all the memory block groups contain a same number of memory blocks.

When one or more of the memory blocks of a given memory block group are free, one or more of the second data items of the corresponding second data entity contain indicators identifying the free memory blocks from among all the memory blocks of this memory block group. In the exemplifying case illustrated in figure 1, there are three free memory blocks in the memory block group related to the first data item '0' and four free memory blocks in the memory block group related to the first data item 'N'. The second data items '$M(0) - 3$', '$M(0) - 2$', and '$M(0) - 1$' of the second data entity 102 contain 'a', 'b', and 'c', respectively, which are the indicators of these three free memory blocks. Correspondingly, the second data items '$M(N) - 4$', '$M(N) - 3$', '$M(N) - 2$', and '$M(N) - 1$' of the second data entity 105 contain 'h', 'b', 'e', and 'c', respectively, which are the indicators of the four free memory blocks in the memory block group related to the first data item 'N'.

When a request to allocate a free memory block has been received, such a first data item that indicates that there is at least one free memory block in the corresponding the memory block group is searched from the first data entity 101. This search can be, for example, a linear search starting from the first data item '0', but it should be noted that this is not the only possible choice. For another example, the first data entity 101 can be arranged to be a logical ring so that each first data item has a predecessor and a successor in the logical ring, and the data structure comprises a pointer 131 indicating, from the logical ring, such a first data item that relates to the memory block group that contains a previously-allocated memory block. The search is started from a first data item that is indicated by the pointer 131. In figure 1, the logical ring is illustrated with an arrow 108 which shows that the successor of the first data item 'N' is the first data item '0'.

In the exemplifying case illustrated in figure 1, the first data item '0' indicates that there are three free memory blocks in the memory block group related to the first data item '0'. Next, such a second data entity, which is related to the memory block group related to the first data item '0', is selected from among all the second data entities. In the exemplifying case illustrated in figure 1, the second data entity 102 is related to the memory block group related to the first data item '0'. From the selected second data entity 102, such a second data item which carries an indicator of a free memory block is selected. In the exemplifying case illustrated in figure 1, each second data entity is presented as an ordered list of the second data items and the indicators of free memory blocks are placed at the end of the ordered list. Hence, in a case where a given first data item is 'n', one can know that n last second data items of the corresponding second data entity are indicators of free memory blocks. Thus, the first data item is actually a pointer that points to the ordered list so that the the pointed second data item and the second data items that are successive in the ordered list contain indicators of free memory blocks. In figure 1, the pointer interpretation of the first data item is illustrated with arrows 106 and 107. In the exemplifying case illustrated in figure 1, the second data item 'M(0) - 3' that is pointed by the first data item '0' can be selected from among all the second data items of the second data entity 102. Hence, the free memory block to be allocated is the memory block that is identified by the indicator 'a'. Next, the first data item '0' is decreased by one down to 2 and, as a corollary, the arrow 106 is shifted to point to the second data item 'M(0) - 2' of the second data entity 102.

It should be noted that arranging the second data entities in ordered lists, where the indicators of free memory blocks are placed at the ends of the ordered lists, is not the only possible choice. The indicators of free memory blocks can be handled in the second data entities according to various pre-determined principles. For example, each second data entity can be an ordered list and the indicators of free memory blocks can be placed at the beginning of the ordered list. For another example, each second data entity can be a logical ring and there can be a ring pointer that points to the first one or to the last one of those second data items which contain the indicator of free memory blocks.

An address that identifies the free memory block being allocated is formed at least partly on the basis of (i) the searched first data item '0' which indicates the memory block group having at least one free memory block and (ii) the indicator 'a' which identifies the said free memory block from among all the memory blocks of the memory block group under consideration. The address can be, for example, the address of the first row of the memory block being allocated.

Advantageously, the memory block groups are consecutively numbered, and, within each memory block group, the memory blocks are consecutively numbered. In this case, the indicator 'a' which identifies the free memory block is advantageously the number of this memory block. For the sake of illustration, we consider a special case where each memory block group has a same number of memory blocks, each memory block has a same size, the memory block groups are located at regular intervals in the address space of the memory, and, within each memory block group, the memory blocks are located at regular intervals in the address space. In this case, the address $Addr_1$ identifying the memory block being allocated can be formed according to the formula:

$$Addr_1 = k_{BG1} \times S_{BG} + k_{B1} \times S_B + C, \tag{1}$$

where $k_{BG1}$ is the number of the memory block group related to the searched first data entity, $k_{B1}$ is the number of the free memory block being allocated, i.e. the indicator identifying this memory block, $S_{BG}$ is a difference of mutually corresponding addresses of two successive memory block groups, $S_B$ is a difference of mutually corresponding addresses of two successive memory blocks in the memory block group related to the searched first data entity, and C is an offset control parameter which is the value of $Addr_1$ in the situation where $S_{BG} = S_B = 0$. The mutually corresponding addresses of the two successive memory block groups can be the addresses of the first rows of the first memory blocks of the two successive memory block groups, and the mutually corresponding addresses of the two successive memory blocks can be the addresses of the first rows of the two successive memory blocks. $S_{BG}$ is the length of the address range of the memory block group when there are no gaps between successive memory block groups. Correspondingly, $S_B$ is the length of the address range of the memory block when there are no gaps between successive memory blocks. The formula (1) is straightforward to understand when the memory block groups are consecutively numbered starting from zero, and, within each memory block group, the memory blocks are consecutively numbered starting from zero. In this case, the offset control parameter C can be a base-address which is the address of the first row of the memory block '0' of the memory block group '0'. The data structure may further comprise one or more parameters 132 which indicate the above-mentioned $S_{BG}$ and/or $S_B$ and/or the base address.

After the address that identifies the memory block being allocated has been formed, it can be delivered to a process from which the request to allocate a free memory block was received. This process can be, for example, a process for queuing and de-queuing data frames, e.g. Internet Protocol "IP" data packets.

When an address identifying a memory block to be released from allocation has been received, the memory block group which contains the memory block to be released is determined on the basis of the said address and information about how the memory has been organized into memory block groups. In this exemplifying case, we assume that the memory block group which contains the memory block to be released is the memory block group related to the first data item 'N'. Next, the first data item 'N' is increased by one up to 5 and, as a corollary, the arrow 107 is shifted to point to the second data item 'M(N) - 5' of the second data entity 105. An indicator identifying the memory block to be released is determined on the basis of the above-mentioned address and information about how the determined memory block group has been organized into memory blocks. This indicator identifies this memory block from among all the memory blocks of the determined memory block group. Next, an appropriate second data item of the second data entity 105 is updated to contain the indicator identifying the memory block to be released. The first data item 'N' was four prior to its above-described update, and thus the second data item 'M(N) - 5' of the second data entity 105 does not contain an indicator of any other free memory block. Therefore this second data item 'M(N) - 5' can be used for storing the indicator identifying the memory block to be released. The releasing operation is completed by setting the second data item 'M(N) - 5' of the second data entity 105 to contain the indicator identifying the memory block to be released.

For the sake of illustration, we consider the special case where each memory block group has a same number of memory blocks, each memory block has a same size, the memory block groups are located at regular intervals in the address space of the memory, and, within each memory block group, the memory blocks are located at regular intervals in the address space. We further assume that the memory block groups are consecutively numbered starting from zero, and, within each memory block group, the memory blocks are consecutively numbered starting from zero. In this case, the number $k_{BG2}$ of the memory block group, which contains the memory block to be released, can be obtained from the following formula:

$$k_{BG2} = \text{the integer part of} \left( \frac{Addr_2 - C}{S_{BG}} \right), \tag{2}$$

where $Addr_2$ is the address identifying the memory block to be released, and "the integer part of" is the greatest integer that is less than or equal to the value under consideration. For example, the integer part of 3.14 is 3 and the integer part of 4.999 is 4. The $S_{BG}$ is the difference of mutually corresponding addresses of two successive memory block groups as in conjunction with the formula (1), and C is the same offset control parameter as in conjunction with the formula (1). The number $k_{B2}$ of the memory block to be released can be obtained from the following formula:

$$k_{B2} = \frac{Addr_2 - k_{BG2} \times S_{BG} - C}{S_B}, \tag{3}$$

where $S_B$ is a difference of mutually corresponding addresses of two successive memory blocks as in conjunction with the formula (1).

It should be noted that embodiments of the present invention are not limited to the above-mentioned special case where each memory block group has a same number of memory blocks, each memory block has a same size, the memory block groups are located at regular intervals in the address space of the memory, and, within each memory block group, the memory blocks are located at regular intervals in the address space. For example, it is possible that the memory is organized to contain two types of memory block groups so that there is a first set of successively located memory block groups having greater memory blocks and a second set of successively located memory block groups having smaller memory blocks. In this exemplifying case, the above-mentioned formulas (1)-(3) can be applied separately to the first and second sets of memory block groups so that a required address-offset is implemented by giving, in each case, a suitable value to the offset control parameter C.

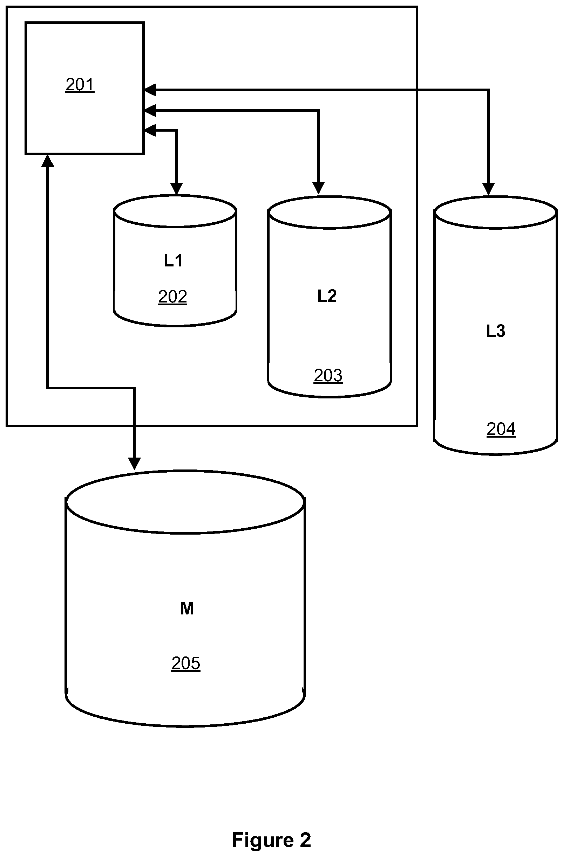

Figure 2 shows a schematic illustration of a device according to an exemplifying embodiment of the invention for controlling a memory 205 organized to contain a plurality of memory block groups each of which containing a plurality of memory blocks. The device can be, for example but not necessarily, an Internet Protocol "IP" router, an Ethernet switch, and/or a multiprotocol label switching "MPLS" switch. In the following text, the reference numbers whose first digit is '1', e.g. 101, 102, refer to figure 1. The device comprises a processor 201 configured to read data from the memory 205. The processor is advantageously configured to use cache memory 202 for speeding up the control of the memory 205. Furthermore, the processor can be configured to operate the second and third level cache memories 203 and 204 in order to compensate the limited capacity of the cache memory 202. The processor 201 is further configured to:

- maintain a first data entity 101 containing first data items so that there is a first data item for each of the memory block groups, each of the first data items indicating a number of free memory blocks in the memory block group related to this first data item, and

- maintain second data entities 102, 103, 104, ..., 105 so that there is a second data entity for each of the memory block groups and each of the second data entities contains second data items so that the number of the second data items in each second data entity is at least the number of the memory blocks in the memory block group related to this second data entity, and, when one or more of the memory blocks of the memory block group related to this second data entity are free, one or more of the second data items of this second data entity contain indicators identifying the free memory blocks from among the memory blocks of the memory block group related to this second data entity.

The processor 201 is configured to carry out the following actions in response to receiving a request to allocate a free memory block:

- searching, from the first data entity 101, such a first data item that indicates that there are one or more free memory blocks in the memory block group related to this first data item,

- selecting, from among the second data entities 102, 103, 104, ...,105, such a second data entity which is related to the memory block group related to the searched first data item,

- selecting, from the selected second data entity, such a second data item which carries an indicator of a free memory block, and

- forming an address identifying the free memory block to be allocated at least partly on the basis of (i) the searched first data item which indicates the memory block group having at least one free memory block and (ii) the indicator of the free memory block.

In a device according an exemplifying embodiment of the invention, the processor 201 is configured to carry out the following actions in response to receiving an address identifying a memory block to be released from allocation:

- determining the memory block group which contains the memory block to be released,

- updating the first data item related to the determined memory block group by adding one to the number of free memory blocks of the determined memory block group,

- determining an indicator which identifies, from among the memory blocks of the determined memory block group, the memory block to be released,

- determining, from the second data entity related to the determined memory block group, such a second data item which does not contain an indicator of any other memory block that is free, and

- setting the determined second data item to contain the indicator which identifies, from among the memory blocks of the determined memory block group, the memory block to be released.

In a device according an exemplifying embodiment of the invention, the processor 201 is configured to:

- maintain each of the second data entities 102, 103, 104, ..., 105 as an ordered list of the second data items belonging to the concerned second data entity,

- select, from the selected second data entity, the $N^{th}$ second data item from the end or from the beginning of the ordered list so as to select, from the selected second data entity, such a second data item which carries the indicator of the free memory block, N being the number of free memory blocks in the memory block group related to the searched first data item.

In a device according an exemplifying embodiment of the invention, the processor 201 is configured to carry out the following actions in order to search, from the first data entity 101, such a first data item that indicates that there are one or more free memory blocks in the memory block group related to this first data item:

- maintaining the first data entity as a logical ring so that each first data item has a predecessor and a successor in the logical ring,

- maintaining a pointer indicating, from the logical ring, such a first data item that relates to the memory block group that contains a previously-allocated memory block, and

- proceeding, starting from the first data item indicated by the pointer, on the logical ring as long as such a first data item that indicates that there are one or more free memory blocks in the memory block group related to this first data item is found.

In a device according an exemplifying embodiment of the invention, the processor 201 is configured to carry out the following actions in order to search, from the first data entity 101, such a first data item that indicates that there are one or more free memory blocks in the memory block group related to this first data item:

- maintaining the first data entity as an ordered list so that each first data item has a predecessor and/or a successor in the ordered list, and

- proceeding, starting from the beginning of the ordered list, on the ordered list as long as such a first data item that indicates that there are one or more free memory blocks in the memory block group related to this first data item is found.

In a device according an exemplifying embodiment of the invention, the processor 201 is configured to maintain a consecutive numbering of the memory block groups and a consecutive numbering of the memory blocks within each memory block group. The processor is configured to form the address identifying the free memory block to be allocated according to the following formula:

$$Addr_1 = k_{BG1} \times S_{BG} + k_{B1} \times S_B + C,$$

where $k_{BG1}$ is the number of the memory block group related to the searched first data entity, $k_{B1}$ is the number of the free memory block to be allocated, $S_{BG}$ is a difference of mutually corresponding addresses of two successive memory block groups, $S_B$ is a difference of mutually corresponding addresses of two successive memory blocks in the memory block group related to the searched first data entity, and C is an offset control parameter which is the value of in the situation where $S_{BG} = S_B = 0$.

In a device according an exemplifying embodiment of the invention, the processor 201 is configured to determine the number $k_{BG2}$ of the memory block group, which contains the memory block to be released, according to the following formula:

$$k_{BG2} = \text{the integer part of} \left( \frac{Addr_2 - C}{S_{BG}} \right),$$

where $Addr_2$ is the address identifying the memory block to be released. The processor 201 is configured to determine the number $k_{B2}$ of the memory block to be released according to the following formula:

$$k_{B2} = \frac{Addr_2 - k_{BG2} \times S_{BG} - C}{S_B}.$$

In a device according an exemplifying embodiment of the invention, the processor 201 is configured to:

- maintain the first data entity 101 so that the first data entity contains 48 first data items each of which containing four bits, and

- maintain the second data entities so that each second data entity comprises 15 second data items each of which containing four bits.

In the above-mentioned exemplifying case, there are 48 memory block groups each containing 15 memory blocks. Each first data item 101 can be four bits because in each memory block group there can be from 0 to 15 free memory blocks and four bits are sufficient for expressing the values from 0 to 15. Each of the second data items 102, 103, 104, ..., 105 can also be four bits. In this case, the size of the first data entity is 48 × 4 bits which is 24 bytes, and the size of each second data entity is 15 × 4 bits which is less than 8 bytes. In a case where a cache line is e.g. 32 bytes, the first data entity 101 fits in a single cache line and four second data entities fit in a single cache line. The whole data structure, i.e. the first data entity and the 48 second data entities, fits in only 13 cache lines. Thus, cache misses are very improbable in allocation and releasing operations, and therefore the cache memory 202 can be effectively utilized.

The processor 201 can be implemented with one or more processor circuits, each of which can be a programmable processor circuit provided with appropriate software, a dedicated hardware processor such as, for example, an application specific integrated circuit "ASIC", or a configurable hardware processor such as, for example, a field programmable gate array "FPGA". Furthermore, it is possible that a first processing circuit is configured to allocate memory blocks and a second processing circuit is configured to release the memory blocks from allocation.

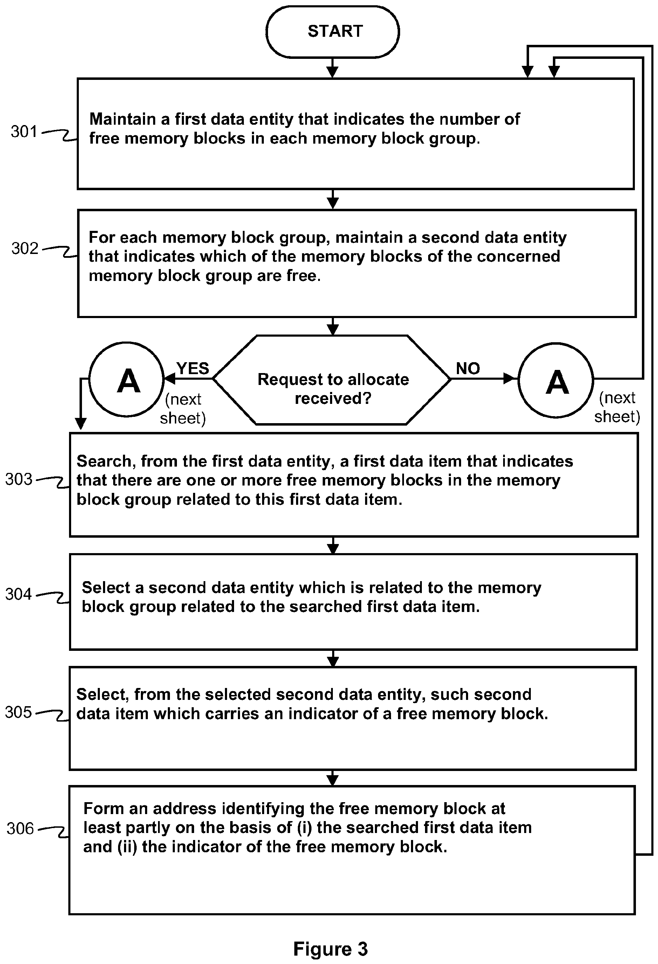

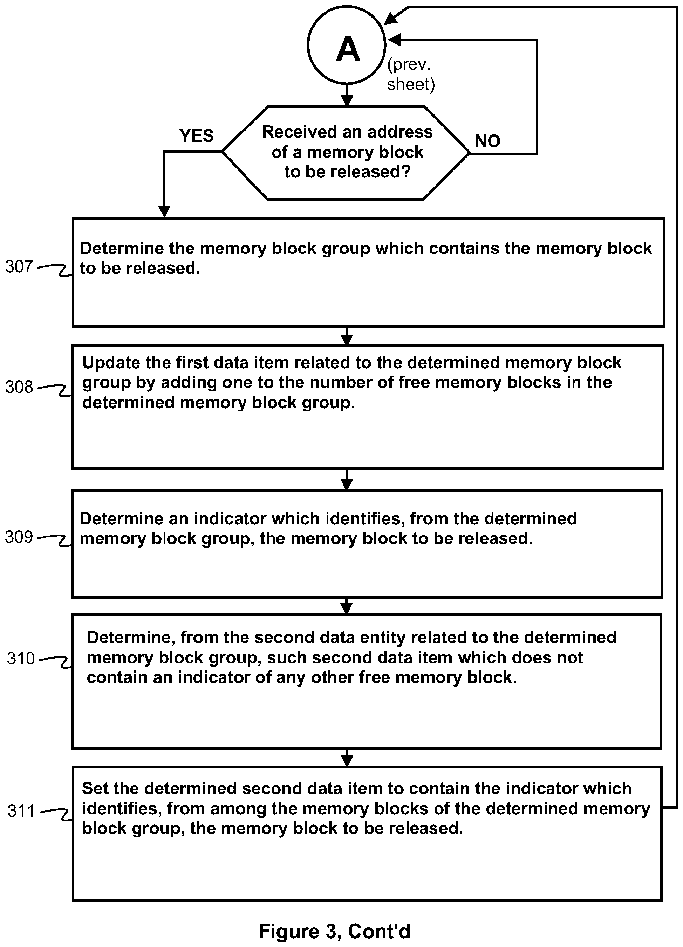

Figure 3 shows a flow chart of a method according to an exemplifying embodiment of the invention for controlling a memory organized to contain a plurality of memory block groups each of which containing a plurality of memory blocks. The method comprises the following actions:

- action 301: maintaining a first data entity containing first data items so that there is a first data item for each of the memory block groups, each of the first data items indicating a number of free memory blocks in the memory block group related to this first data item, and

- action 302: maintaining second data entities so that there is a second data entity for each of the memory block groups and each of the second data entities contains second data items so that the number of the second data items in each second data entity is at least the number of the memory blocks in the memory block group related to this second data entity, and, when one or more of the memory blocks of the memory block group related to this second data entity are free, one or more of the second data items of this second data entity contain indicators identifying the free memory blocks from among the memory blocks of the memory block group related to this second data entity.

The method further comprises carrying out the following actions in response to receiving a request to allocate a free memory block:

- action 303: searching, from the first data entity, such a first data item that indicates that there are one or more free memory blocks in the memory block group related to this first data item,

- action 304: selecting, from among the second data entities, such a second data entity which is related to the memory block group related to the searched first data item,

- action 305: selecting, from the selected second data entity, such a second data item which carries an indicator of a free memory block, and

- action 306: forming a first address identifying the free memory block to be allocated at least partly on the basis of (i) the searched first data item which indicates the memory block group having at least one free memory block and (ii) the indicator of the free memory block.

A method according to an exemplifying embodiment of the invention comprises carrying out the following actions in response to receiving an address identifying a memory block to be released from allocation:

- action 307: determining the memory block group which contains the memory block to be released,

- action 308: updating the first data item related to the determined memory block group by adding one to the number of free memory blocks in the determined memory block group,

- action 309: determining an indicator which identifies, from among the memory blocks of the determined memory block group, the memory block to be released,

- action 310: determining, from the second data entity related to the determined memory block group, such a second data item which does not contain an indicator of any other memory block that is free, and

- action 311: setting the determined second data item to contain the indicator which identifies, from among the memory blocks of the determined memory block group, the memory block to be released.

A method according to an exemplifying embodiment of the invention comprises:

- maintaining each of the second data entities as an ordered list of the second data items belonging to the concerned second data entity,

- selecting, from the selected second data entity, the $N^{th}$ second data item from the end or from the beginning of the ordered list so as to select, from the selected second data entity, such a second data item which carries the indicator of the free memory block, N being the number of free memory blocks in the memory block group related to the searched first data item.

A method according to an exemplifying embodiment of the invention comprises carrying out the following actions in order to search, from the first data entity, such a first data item that indicates that there are one or more free memory blocks in the memory block group related to this first data item:

- maintaining the first data entity as a logical ring so that each first data item has a predecessor and a successor in the logical ring,

- maintaining a pointer indicating, from the logical ring, such a first data item that relates to the memory block group that contains a previously-allocated memory block, and

- proceeding, starting from the first data item indicated by the pointer, on the logical ring as long as such a first data item that indicates that there are one or more free memory blocks in the memory block group related to this first data item is found.

A method according to an exemplifying embodiment of the invention comprises carrying out the following actions in order to search, from the first data entity, such a first data item that indicates that there are one or more free memory blocks in the memory block group related to this first data item:

- maintaining the first data entity as an ordered list so that each first data item has a predecessor and/or a successor in the ordered list, and
- proceeding, starting from the beginning of the ordered list, on the ordered list as long as such a first data item that indicates that there are one or more free memory blocks in the memory block group related to this first data item is found.

In a method according to an exemplifying embodiment of the invention, the memory block groups are consecutively numbered and, within each memory block group, memory blocks are consecutively numbered. The address identifying the free memory block to be allocated is formed according to the following formula:

$$Addr_1 = k_{BG1} \times S_{BG} + k_{B1} \times S_B + C,$$

where $k_{BG1}$ is the number of the memory block group related to the searched first data entity, $k_{B1}$ is the number of the free memory block to be allocated, $S_{BG}$ is a difference of mutually corresponding addresses of two successive memory block groups, $S_B$ is a difference of mutually corresponding addresses of two successive memory blocks in the memory block group related to the searched first data entity, and C is an offset control parameter which is the value of $Addr_1$ in the situation where $S_{BG} = S_B = 0$.

In a method according to an exemplifying embodiment of the invention, the number $k_{BG2}$ of the memory block group, which contains the memory block to be released, is determined according to the following formula:

$$k_{BG2} = \text{the integer part of} \left( \frac{Addr_2 - C}{S_{BG}} \right),$$

and the number $k_{B2}$ of the memory block to be released is determined according to the following formula:

$$k_{B2} = \frac{Addr_2 - k_{BG2} \times S_{BG} - C}{S_B},$$

where $Addr_2$ is the second address identifying the memory block to be released.

In a method according to an exemplifying embodiment of the invention, the first data entity contains 48 first data items each of which containing four bits, and each second data entity comprises 15 second data items each of which containing four bits.

A computer program according to an embodiment of the invention comprises software modules for controlling a memory organized to contain a plurality of memory block groups each of which containing a plurality of memory blocks. The software modules comprise computer executable instructions for controlling a programmable processor to:

- maintain a first data entity containing first data items so that there is a first data item for each of the memory block groups, each of the first data items indicating a number of free memory blocks in the memory block group related to this first data item, and

- maintain second data entities so that there is a second data entity for each of the memory block groups and each of the second data entities contains second data items so that the number of the second data items in each second data entity is at least the number of the memory blocks in the memory block group related to this second data entity, and, when one or more of the memory blocks of the memory block group related to this second data entity are free, one or more of the second data items of this second data entity contain indicators identifying the free memory blocks from among the memory blocks of the memory block group related to this second data entity.

The software modules further comprise computer executable instructions for controlling the programmable processor to carry out the following actions in response to receiving a request to allocate a free memory block:

- searching, from the first data entity, such a first data item that indicates that there are one or more free memory blocks in the memory block group related to this first data item,

- selecting, from among the second data entities, such a second data entity which is related to the memory block group related to the searched first data item,

- selecting, from the selected second data entity, such a second data item which carries an indicator of a free memory block, and

- forming a first address identifying the free memory block to be allocated at least partly on the basis of (i) the searched first data item which indicates the memory block group having at least one free memory block and (ii) the indicator of the free memory block.

In a computer program according to an exemplifying embodiment of the invention, the software modules further comprise computer executable instructions for controlling the programmable processor to carry out the following actions in response to receiving an address identifying a memory block to be released from allocation:

- determining the memory block group which contains the memory block to be released,

- updating the first data item related to the determined memory block group by adding one to the number of free memory blocks in the determined memory block group,

- determining an indicator which identifies, from among the memory blocks of the determined memory block group, the memory block to be released,

- determining, from the second data entity related to the determined memory block group, such a second data item which does not contain an indicator of any other memory block that is free, and

- setting the determined second data item to contain the indicator which identifies, from among the memory blocks of the determined memory block group, the memory block to be released.

The software modules can be e.g. subroutines or functions implemented with a suitable programming language and with a compiler suitable for the programming language and the programmable processor.
A computer program product according to an embodiment of the invention comprises a computer readable medium, e.g. a compact disc ("CD"), encoded with a computer program according to an embodiment of invention.
The specific examples provided in the description given above should not be construed as limiting the scope and/or the applicability of the appended claims.

**Claims**

1.  A device for controlling a memory organized to contain a plurality of memory block groups each of which containing a plurality of memory blocks, the device comprising a processor (201) for receiving a request to allocate a free memory block from among the memory blocks of the memory, wherein the processor is configured to:

    - maintain a first data entity (101) containing first data items so that there is a first data item for each of the memory block groups, each of the first data items indicating how many free memory blocks there are in the memory block group related to this first data item, and
    - maintain second data entities (102-105) so that there is a second data entity for each of the memory block groups and each of the second data entities contains second data items so that the number of the second data items in each second data entity is at least the number of the memory blocks in the memory block group related to this second data entity, and, when one or more of the memory blocks of the memory block group related to this second data entity are free, one or more of the second data items of this second data entity contain indicators identifying the free memory blocks from among the memory blocks of the memory block group related to this second data entity,

    wherein the processor is configured to carry out the following actions in response to receiving the request to allocate a free memory block:

    - searching, from the first data entity, such a first data item that indicates that there are one or more free memory blocks in the memory block group related to this first data item,
    - selecting, from among the second data entities, such a second data entity which is related to the memory block group related to the searched first data item,
    - selecting, from the selected second data entity, such a second data item which carries an indicator of a free memory block,
    - forming a first address identifying the free memory block to be allocated at least partly on the basis of the searched first data item which indicates the memory block group having at least one free memory block and the indicator of the free memory block, and
    - updating the searched first data item to correspond to a situation in which the number of free memory blocks in the memory block group related to the searched first data item has decreased by one.

2.  A device according to claim 1, wherein the processor is configured to carry out the following actions in response to receiving a second address identifying a memory block to be released from allocation:

    - determining the memory block group which contains the memory block to be released,
    - updating the first data item related to the determined memory block group to correspond to a situation in which the number of free memory blocks in the determined memory block group has increased by one,
    - determining an indicator which identifies, from among the memory blocks of the determined memory block group, the memory block to be released,
    - determining, from the second data entity related to the determined memory block group, such a second data item which does not contain an indicator identifying, from among the memory blocks of the determined memory block group, any memory block that is free and that is other than the memory block to be released, and
    - setting the determined second data item to contain the indicator which identifies, from among the memory blocks of the determined memory block group, the memory block to be released.

3.  A device according to claim 1 or 2, wherein the processor is configured to:

    - maintain each of the second data entities as an ordered list of the second data items belonging to the concerned second data entity,

- select, from the selected second data entity, the $N^{th}$ second data item from the end or from the beginning of the ordered list so as to select, from the selected second data entity, such a second data item which carries the indicator of the free memory block, N being the number of free memory blocks in the memory block group related to the searched first data item.

4. A device according to any of claims 1-3, wherein the processor is configured to carry out the following actions in order to search, from the first data entity, such a first data item that indicates that there are one or more free memory blocks in the memory block group related to this first data item:

- maintaining the first data entity as a logical ring so that each first data item has a predecessor and a successor in the logical ring,
- maintaining a pointer indicating, from the logical ring, such a first data item that relates to the memory block group that contains a previously-allocated memory block, and
- proceeding, starting from the first data item indicated by the pointer, on the logical ring as long as such a first data item that indicates that there are one or more free memory blocks in the memory block group related to this first data item is found.

5. A device according to any of claims 1-3, wherein the processor is configured to carry out the following actions in order to search, from the first data entity, such a first data item that indicates that there are one or more free memory blocks in the memory block group related to this first data item:

- maintaining the first data entity as an ordered list so that each first data item has a predecessor and/or a successor in the ordered list, and
- proceeding, starting from the beginning of the ordered list, on the ordered list as long as such a first data item that indicates that there are one or more free memory blocks in the memory block group related to this first data item is found.

6. A device according to any of claims 1-5, wherein the processor is configured to maintain a consecutive numbering of the memory block groups and a consecutive numbering of the memory blocks within each memory block group, and the processor is configured to form the first address identifying the free memory block to be allocated according to the following formula:

$$Addr_1 = k_{BG1} \times S_{BG} + k_{B1} \times S_B + C,$$

where $Addr_1$ is the first address, $k_{BG1}$ is the number of the memory block group related to the searched first data entity, $k_{B1}$ is the number of the free memory block to be allocated, $S_{BG}$ is a difference of mutually corresponding addresses of two successive memory block groups, $S_B$ is a difference of mutually corresponding addresses of two successive memory blocks in the memory block group related to the searched first data entity, and C is an offset control parameter which is the value of $Addr_1$ when $S_{BG} = S_B = 0$.

7. A device according to claim 6, wherein the processor is configured to determine the number of the memory block group, which contains the memory block to be released, according to the following formula:

$$k_{BG2} = \text{the integer part of} \left( \frac{Addr_2 - C}{S_{BG}} \right),$$

and to determine the number of the memory block to be released according to the following formula:

$$k_{B2} = \frac{Addr_2 - k_{BG2} \times S_{BG} - C}{S_B},$$

where $Addr_2$ is the second address identifying the memory block to be released, $k_{BG2}$ is the number of the memory block group which contains the memory block to be released, and $k_{B2}$ is the number of the memory block to be released.

8. A device according to any of claims 1-7, wherein the processor is configured to:

  - maintain the first data entity so that the first data entity contains 48 first data items each of which containing four bits, and
  - maintain the second data entities so that each second data entity comprises 15 second data items each of which containing four bits.

9. A device according to any of claims 1-8, wherein the device is at least one of the following: an Internet Protocol "IP" router, an Ethernet switch, a multiprotocol label switching "MPLS" switch.

10. A method for controlling a memory organized to contain a plurality of memory block groups each of which containing a plurality of memory blocks, wherein the method comprises:

  - maintaining (301) a first data entity (101) containing first data items so that there is a first data item for each of the memory block groups, each of the first data items indicating how many free memory blocks there are in the memory block group related to this first data item, and
  - maintaining (302) second data entities (102-105) so that there is a second data entity for each of the memory block groups and each of the second data entities contains second data items so that the number of the second data items in each second data entity is at least the number of the memory blocks in the memory block group related to this second data entity, and, when one or more of the memory blocks of the memory block group related to this second data entity are free, one or more of the second data items of this second data entity contain indicators identifying the free memory blocks from among the memory blocks of the memory block group related to this second data entity,

  wherein the method further comprises carrying out the following actions in response to receiving a request to allocate a free memory block:

  - searching (303), from the first data entity, such a first data item that indicates that there are one or more free memory blocks in the memory block group related to this first data item,
  - selecting (304), from among the second data entities, such a second data entity which is related to the memory block group related to the searched first data item,
  - selecting (305), from the selected second data entity, such a second data item which carries an indicator of a free memory block,
  - forming (306) a first address identifying the free memory block to be allocated at least partly on the basis of the searched first data item which indicates the memory block group having at least one free memory block and the indicator of the free memory block, and
  - updating the searched first data item to correspond to a situation in which the number of free memory blocks in the memory block group related to the searched first data item has decreased by one.

11. A method according to claim 10, wherein the method comprises carrying out the following actions in response to receiving a second address identifying a memory block to be released from allocation:

  - determining (307) the memory block group which contains the memory block to be released,
  - updating (308) the first data item related to the determined memory block group to correspond to a situation in which the number of free memory blocks in the determined memory block group has increased by one,
  - determining (309) an indicator which identifies, from among the memory blocks of the determined memory block group, the memory block to be released,
  - determining (310), from the second data entity related to the determined memory block group, such a second data item which does not contain an indicator identifying, from among the memory blocks of the determined memory block group, any memory block that is free and that is other than the memory block to be released, and
  - setting (311) the determined second data item to contain the indicator which identifies, from among the memory blocks of the determined memory block group, the memory block to be released.

12. A method according to claim 10 or 11, wherein the method comprises:

  - maintaining each of the second data entities as an ordered list of the second data items belonging to the concerned second data entity,
- selecting, from the selected second data entity, the $N^{th}$ second data item from the end or from the beginning of the ordered list so as to select, from the selected second data entity, such a second data item which carries the indicator of the free memory block, N being the number of free memory blocks in the memory block group related to the searched first data item.

13. A method according to any of claims 10-12, wherein the method comprises carrying out the following actions in order to search, from the first data entity, such a first data item that indicates that there are one or more free memory blocks in the memory block group related to this first data item:

- maintaining the first data entity as a logical ring so that each first data item has a predecessor and a successor in the logical ring,
- maintaining a pointer indicating, from the logical ring, such a first data item that relates to the memory block group that contains a previously-allocated memory block, and
- proceeding, starting from the first data item indicated by the pointer, on the logical ring as long as such a first data item that indicates that there are one or more free memory blocks in the memory block group related to this first data item is found.

14. A computer program for controlling a memory organized to contain a plurality of memory block groups each of which containing a plurality of memory blocks, wherein the computer program comprises computer executable instructions that, when executed, control a programmable processor to:

- maintain a first data entity (101) containing first data items so that there is a first data item for each of the memory block groups, each of the first data items indicating how many free memory blocks there are in the memory block group related to this first data item, and
- maintain second data entities (102--105) so that there is a second data entity for each of the memory block groups and each of the second data entities contains second data items so that the number of the second data items in each second data entity is at least the number of the memory blocks in the memory block group related to this second data entity, and, when one or more of the memory blocks of the memory block group related to this second data entity are free, one or more of the second data items of this second data entity contain indicators identifying the free memory blocks from among the memory blocks of the memory block group related to this second data entity,

wherein the computer program further comprises computer executable instructions that, when executed, control the programmable processor to carry out the following actions in response to receiving a request to allocate a free memory block:

- searching, from the first data entity, such a first data item that indicates that there are one or more free memory blocks in the memory block group related to this first data item,
- selecting, from among the second data entities, such a second data entity which is related to the memory block group related to the searched first data item,
- selecting, from the selected second data entity, such a second data item which carries an indicator of a free memory block,
- forming a first address identifying the free memory block to be allocated at least partly on the basis of the searched first data item which indicates the memory block group having at least one free memory block and the indicator of the free memory block, and
- updating the searched first data item to correspond to a situation in which the number of free memory blocks in the memory block group related to the searched first data item has decreased by one.

15. A computer program according to claim 14, wherein the computer program further comprises computer executable instructions that, when executed, control the programmable processor to carry out the following actions in response to receiving a second address identifying a memory block to be released from allocation:

- determining the memory block group which contains the memory block to be released,
- updating the first data item related to the determined memory block group to correspond to a situation in which the number of free memory blocks in the determined memory block group has increased by one,
- determining an indicator which identifies, from among the memory blocks of the determined memory block group, the memory block to be released,

- determining, from the second data entity related to the determined memory block group, such a second data item which does not contain an indicator identifying, from among the memory blocks of the determined memory block group, any memory block that is free and that is other than the memory block to be released, and
- setting the determined second data item to contain the indicator which identifies, from among the memory blocks of the determined memory block group, the memory block to be released.

**Patentansprüche**

1. Vorrichtung zur Steuerung eines Speichers, der dazu organisiert ist, mehrere Speicherblockgruppen zu enthalten, die jeweils mehrere Speicherblöcke enthalten, wobei die Vorrichtung einen Prozessor (201) zum Empfangen einer Anforderung zum Zuweisen eines freien Speicherblocks von den Speicherblöcken des Speichers umfasst, wobei der Prozessor konfiguriert ist zum:

   - Pflegen einer ersten Datenentität (101), die erste Datenelemente enthält, so dass ein erstes Datenelement für jede der Speicherblockgruppen vorliegt, wobei alle der ersten Datenelemente angeben, wie viele freie Speicherblöcke in der Speicherblockgruppe, die mit diesem ersten Datenelement zusammenhängt, vorliegen, und
   - Pflegen von zweiten Datenentitäten (102-105), so dass eine zweite Datenentität für jede der Speicherblockgruppen vorliegt und jede der zweiten Datenentitäten zweite Datenelemente enthält, so dass die Anzahl der zweiten Datenelemente in jeder zweiten Datenentität mindestens die Anzahl der Speicherblöcke in der Speicherblockgruppe ist, die mit dieser zweiten Datenentität zusammenhängt, und wenn ein oder mehrere der Speicherblöcke der Speicherblockgruppe, die mit dieser zweiten Datenentität zusammenhängt, frei sind, ein oder mehrere der zweiten Datenelemente dieser zweiten Datenentität Indikatoren enthalten, die die freien Speicherblöcke von den Speicherblöcken der Speicherblockgruppe, die mit dieser zweiten Datenentität zusammenhängt, identifizieren,

   wobei der Prozessor dazu konfiguriert ist, die folgenden Aktionen als Reaktion auf ein Empfangen der Anforderung zum Zuweisen eines freien Speicherblocks durchzuführen:

   - Suchen eines derartigen ersten Datenelements, das angibt, dass ein oder mehrere freie Speicherblöcke in der Speicherblockgruppe, die mit diesem ersten Datenelement zusammenhängt, vorliegen, aus der ersten Datenentität,
   - Auswählen einer derartigen zweiten Datenentität, die mit der Speicherblockgruppe zusammenhängt, die mit dem gesuchten ersten Datenelement zusammenhängt, aus den zweiten Datenentitäten,
   - Auswählen eines derartigen zweiten Datenelements, das einen Indikator eines freien Speicherblocks trägt, aus der ausgewählten zweiten Datenentität,
   - Bilden einer ersten Adresse, die den zuzuweisenden freien Speicherblock identifiziert, zumindest zum Teil auf der Basis des gesuchten ersten Datenelements, das angibt, dass die Speicherblockgruppe mindestens einen freien Speicherblock aufweist, und des Indikators des freien Speicherblocks, und
   - Aktualisieren des gesuchten ersten Datenelements, um einer Situation zu entsprechen, in der die Anzahl von freien Speicherblöcken in der Speicherblockgruppe, die mit dem gesuchten ersten Datenelement zusammenhängt, um eins abgenommen hat.

2. Vorrichtung nach Anspruch 1, wobei der Prozessor dazu konfiguriert ist, die folgenden Aktionen als Reaktion auf ein Empfangen einer zweiten Adresse, die einen Speicherblock identifiziert, der aus einer Zuweisung freigegeben werden soll, durchzuführen:

   - Bestimmen der Speicherblockgruppe, die den freizugebenden Speicherblock enthält,
   - Aktualisieren des ersten Datenelements, das mit der bestimmten Speicherblockgruppe zusammenhängt, um einer Situation zu entsprechen, in der die Anzahl von freien Speicherblöcken in der bestimmten Speicherblockgruppe um eins zugenommen hat,
   - Bestimmen eines Indikators, der den freizugebenden Speicherblock aus den Speicherblöcken der bestimmten Speicherblockgruppe identifiziert,
   - Bestimmen eines derartigen zweiten Datenelements, das keinen Indikator enthält, der einen beliebigen Speicherblock, der frei ist und der sich von dem freizugebenden Speicherblock unterscheidet, aus den Speicherblöcken der bestimmten Speicherblockgruppe identifiziert, aus der zweiten Datenentität, die mit der bestimmten Speicherblockgruppe zusammenhängt, und

- Einstellen des bestimmten zweiten Datenelements, um den Indikator zu enthalten, der den freizugebenden Speicherblock aus den Speicherblöcken der bestimmten Speicherblockgruppe identifiziert.

3. Vorrichtung nach Anspruch 1 oder 2, wobei der Prozessor konfiguriert ist zum:

- Pflegen von jeder der zweiten Datenentitäten als eine geordnete Liste der zweiten Datenelemente, die zu der betroffenen zweiten Datenentität gehören,
- Auswählen des N-ten zweiten Datenelements vom Ende oder vom Beginn der geordneten Liste aus der ausgewählten zweiten Datenentität, um ein derartiges zweites Datenelement, das den Indikator des freien Speicherblocks trägt, aus der ausgewählten zweiten Datenentität auszuwählen, wobei N die Anzahl von freien Speicherblöcken in der Speicherblockgruppe ist, die mit dem gesuchten ersten Datenelement zusammenhängt.

4. Vorrichtung nach einem der Ansprüche 1 bis 3, wobei der Prozessor dazu konfiguriert ist, die folgenden Aktionen durchzuführen, um ein derartiges erstes Datenelement, das angibt, das ein oder mehrere freie Speicherblöcke in der Speicherblockgruppe, die mit diesem ersten Datenelement zusammenhängt, vorliegen, aus der ersten Datenentität zu suchen:

- Pflegen der ersten Datenentität als einen logischen Ring, so dass jedes erste Datenelement einen Vorgänger und einen Nachfolger in dem logischen Ring aufweist,
- Pflegen eines Zeigers, der ein derartiges erstes Datenelement, das mit der Speicherblockgruppe zusammenhängt, die einen zuvor zugewiesenen Speicherblock enthält, aus dem logischen Ring angibt, und
- Fortfahren an dem logischen Ring beginnend von dem ersten Datenelement, das von dem Zeiger angegeben wird, so lange bis ein erstes Datenelement, das angibt, das ein oder mehrere freie Speicherblöcke in der Speicherblockgruppe, die mit diesem ersten Datenelement zusammenhängt, vorliegen, gefunden wird.

5. Vorrichtung nach einem der Ansprüche 1 bis 3, wobei der Prozessor dazu konfiguriert ist, die folgenden Aktionen durchzuführen, um ein derartiges erstes Datenelement, das angibt, das ein oder mehrere freie Speicherblöcke in der Speicherblockgruppe, die mit diesem ersten Datenelement zusammenhängt, vorliegen, aus der ersten Datenentität zu suchen:

- Pflegen der ersten Datenentität als eine geordnete Liste, so dass jedes erste Datenelement einen Vorgänger und/oder einen Nachfolger in der geordneten Liste aufweist, und
- Fortfahren an der geordneten Liste beginnend von dem Beginn der geordneten Liste, so lange bis ein erstes Datenelement, das angibt, das ein oder mehrere freie Speicherblöcke in der Speicherblockgruppe, die mit diesem ersten Datenelement zusammenhängt, vorliegen, gefunden wird.

6. Vorrichtung nach einem der Ansprüche 1-5, wobei der Prozessor dazu konfiguriert ist, eine fortlaufende Nummerierung der Speicherblockgruppen und eine fortlaufende Nummerierung der Speicherblöcke innerhalb jeder Speicherblockgruppe zu pflegen, und der Prozessor dazu konfiguriert ist, die erste Adresse, die den freizugebenden freien Speicherblock identifiziert, gemäß der folgenden Formel zu bilden:

$$Addr_1 = k_{BG1} \times S_{BG} + k_{B1} \times S_B + C,$$

wobei $Addr_1$ die erste Adresse ist, $k_{BG1}$ die Nummer der Speicherblockgruppe ist, die mit der gesuchten ersten Datenentität zusammenhängt, $k_{B1}$ die Nummer des freizugebenden freien Speicherblocks ist, $S_{BG}$ eine Differenz von einander entsprechenden Adressen von zwei aufeinanderfolgenden Speicherblockgruppen ist, $S_B$ eine Differenz von einander entsprechenden Adressen von zwei aufeinanderfolgenden Speicherblockgruppen in der Speicherblockgruppe ist, die mit der gesuchten ersten Datenentität zusammenhängt, und C ein Versatzsteuerparameter ist, der der Wert von $Addr_1$ ist, wenn $S_{BG} = S_B = 0$.

7. Vorrichtung nach Anspruch 6, wobei der Prozessor dazu konfiguriert ist, die Nummer der Speicherblockgruppe, die den freizugebenden Speicherblock enthält, gemäß der folgenden Formel zu bestimmen:

$$k_{BG2} = \text{der ganzzahlige Teil von } \left( \frac{Addr_2 - C}{S_{BG}} \right),$$

und die Nummer des freizugebenden Speicherblocks gemäß der folgenden Formel zu bestimmen:

$$k_{B2} = \frac{Addr_2 - k_{BG2} x S_{BG} - C}{S_B},$$

wobei $Addr_2$ die zweite Adresse ist, die den freizugebenden Speicherblock identifiziert, $k_{BG2}$ die Nummer der Speicherblockgruppe ist, die den freizugebenden Speicherblock enthält, und $k_{B2}$ die Nummer des freizugebenden Speicherblocks ist.

8. Vorrichtung nach einem der Ansprüche 1 bis 7, wobei der Prozessor konfiguriert ist zum:

- Pflegen der ersten Datenentität, so dass die erste Datenentität 48 erste Datenelemente enthält, die jeweils vier Bits enthalten, und
- Pflegen der zweiten Datenentitäten, so dass jede zweite Datenentität 15 zweite Datenelemente enthält, die jeweils vier Bits enthalten.

9. Vorrichtung nach einem der Ansprüche 1 bis 8, wobei die Vorrichtung mindestens einer der folgenden ist: ein Internet-Protokoll-"IP"-Router, ein Ethernet-Switch, ein MultiProtocol-Label-Switching-"MPLS"-Switch.

10. Verfahren zur Steuerung eines Speichers, der dazu organisiert ist, mehrere Speicherblockgruppen zu enthalten, die jeweils mehrere Speicherblöcke enthalten, wobei das Verfahren umfasst:

- Pflegen (301) einer ersten Datenentität (101), die erste Datenelemente enthält, so dass ein erstes Datenelement für jede der Speicherblockgruppen vorliegt, wobei alle der ersten Datenelemente angeben, wie viele freie Speicherblöcke in der Speicherblockgruppe, die mit diesem ersten Datenelement zusammenhängt, vorliegen, und
- Pflegen (302) von zweiten Datenentitäten (102-105), so dass eine zweite Datenentität für jede der Speicherblockgruppen vorliegt und jede der zweiten Datenentitäten zweite Datenelemente enthält, so dass die Anzahl der zweiten Datenelemente in jeder zweiten Datenentität mindestens die Anzahl der Speicherblöcke in der Speicherblockgruppe ist, die mit dieser zweiten Datenentität zusammenhängt, und wenn ein oder mehrere der Speicherblöcke der Speicherblockgruppe, die mit dieser zweiten Datenentität zusammenhängt, frei sind, ein oder mehrere der zweiten Datenelemente dieser zweiten Datenentität Indikatoren enthalten, die die freien Speicherblöcke von den Speicherblöcken der Speicherblockgruppe, die mit dieser zweiten Datenentität zusammenhängt, identifizieren,

wobei das Verfahren weiterhin ein Durchführen der folgenden Aktionen als Reaktion auf ein Empfangen der Anforderung zum Zuweisen eines freien Speicherblocks umfasst:

- Suchen (303) eines derartigen ersten Datenelements, das angibt, dass ein oder mehrere freie Speicherblöcke in der Speicherblockgruppe, die mit diesem ersten Datenelement zusammenhängt, vorliegen, aus der ersten Datenentität,
- Auswählen (304) einer derartigen zweiten Datenentität, die mit der Speicherblockgruppe zusammenhängt, die mit dem gesuchten ersten Datenelement zusammenhängt, aus den zweiten Datenentitäten,
- Auswählen (305) eines derartigen zweiten Datenelements, das einen Indikator eines freien Speicherblocks trägt, aus der ausgewählten zweiten Datenentität,
- Bilden (306) einer ersten Adresse, die den zuzuweisenden freien Speicherblock identifiziert, zumindest zum Teil auf der Basis des gesuchten ersten Datenelements, das angibt, dass die Speicherblockgruppe mindestens einen freien Speicherblock aufweist, und des Indikators des freien Speicherblocks, und
- Aktualisieren des gesuchten ersten Datenelements, um einer Situation zu entsprechen, in der die Anzahl von freien Speicherblöcken in der Speicherblockgruppe, die mit dem gesuchten ersten Datenelement zusammenhängt, um eins abgenommen hat.

**11.** Verfahren nach Anspruch 10, wobei das Verfahren ein Durchführen der folgenden Aktionen als Reaktion auf ein Empfangen einer zweiten Adresse, die einen Speicherblock identifiziert, der aus einer Zuweisung freigegeben werden soll, umfasst:

- Bestimmen (307) der Speicherblockgruppe, die den freizugebenden Speicherblock enthält,
- Aktualisieren (308) des ersten Datenelements, das mit der bestimmten Speicherblockgruppe zusammenhängt, um einer Situation zu entsprechen, in der die Anzahl von freien Speicherblöcken in der bestimmten Speicherblockgruppe um eins zugenommen hat,
- Bestimmen (309) eines Indikators, der den freizugebenden Speicherblock aus den Speicherblöcken der bestimmten Speicherblockgruppe identifiziert,
- Bestimmen (310) eines derartigen zweiten Datenelements, das keinen Indikator enthält, der einen beliebigen Speicherblock, der frei ist und der sich von dem freizugebenden Speicherblock unterscheidet, aus den Speicherblöcken der bestimmten Speicherblockgruppe identifiziert, aus der zweiten Datenentität, die mit der bestimmten Speicherblockgruppe zusammenhängt, und
- Einstellen (311) des bestimmten zweiten Datenelements, um den Indikator zu enthalten, der den freizugebenden Speicherblock aus den Speicherblöcken der bestimmten Speicherblockgruppe identifiziert.

**12.** Verfahren nach Anspruch 10 oder 11, wobei das Verfahren umfasst:

- Pflegen von jeder der zweiten Datenentitäten als eine geordnete Liste der zweiten Datenelemente, die zu der betroffenen zweiten Datenentität gehören,
- Auswählen des N-ten zweiten Datenelements vom Ende oder vom Beginn der geordneten Liste aus der ausgewählten zweiten Datenentität, um ein derartiges zweites Datenelement, das den Indikator des freien Speicherblocks trägt, aus der ausgewählten zweiten Datenentität auszuwählen, wobei N die Anzahl von freien Speicherblöcken in der Speicherblockgruppe ist, die mit dem gesuchten ersten Datenelement zusammenhängt.

**13.** Verfahren nach einem der Ansprüche 10 bis 12, wobei das Verfahren ein Durchführen der folgenden Aktionen umfasst, um ein derartiges erstes Datenelement, das angibt, das ein oder mehrere freie Speicherblöcke in der Speicherblockgruppe, die mit diesem ersten Datenelement zusammenhängt, vorliegen, aus der ersten Datenentität zu suchen:

- Pflegen der ersten Datenentität als einen logischen Ring, so dass jedes erste Datenelement einen Vorgänger und einen Nachfolger in dem logischen Ring aufweist,
- Pflegen eines Zeigers, der ein derartiges erstes Datenelement, das mit der Speicherblockgruppe zusammenhängt, die einen zuvor zugewiesenen Speicherblock enthält, aus dem logischen Ring angibt, und
- Fortfahren an dem logischen Ring beginnend von dem ersten Datenelement, das von dem Zeiger angegeben wird, so lange bis ein erstes Datenelement, das angibt, das ein oder mehrere freie Speicherblöcke in der Speicherblockgruppe, die mit diesem ersten Datenelement zusammenhängt, vorliegen, gefunden wird.

**14.** Computerprogramm zur Steuerung eines Speichers, der dazu organisiert ist, mehrere Speicherblockgruppen zu enthalten, die jeweils mehrere Speicherblöcke enthalten, wobei das Computerprogramm computerausführbare Anweisungen umfasst, die bei Ausführung einen programmierbaren Prozessor steuern zum:

- Pflegen einer ersten Datenentität (101), die erste Datenelemente enthält, so dass ein erstes Datenelement für jede der Speicherblockgruppen vorliegt, wobei alle der ersten Datenelemente angeben, wie viele freie Speicherblöcke in der Speicherblockgruppe, die mit diesem ersten Datenelement zusammenhängt, vorliegen, und
- Pflegen von zweiten Datenentitäten (102-105), so dass eine zweite Datenentität für jede der Speicherblockgruppen vorliegt und jede der zweiten Datenentitäten zweite Datenelemente enthält, so dass die Anzahl der zweiten Datenelemente in jeder zweiten Datenentität mindestens die Anzahl der Speicherblöcke in der Speicherblockgruppe ist, die mit dieser zweiten Datenentität zusammenhängt, und wenn ein oder mehrere der Speicherblöcke der Speicherblockgruppe, die mit dieser zweiten Datenentität zusammenhängt, frei sind, ein oder mehrere der zweiten Datenelemente dieser zweiten Datenentität Indikatoren enthalten, die die freien Speicherblöcke von den Speicherblöcken der Speicherblockgruppe, die mit dieser zweiten Datenentität zusammenhängt, identifizieren,

wobei das Computerprogramm weiterhin computerausführbare Anweisungen umfasst, die bei Ausführung den programmierbaren Prozessor zum Durchführen der folgenden Aktionen als Reaktion auf ein Empfangen einer Anforderung zum Zuweisen eines freien Speicherblocks steuern:

- Suchen eines derartigen ersten Datenelements, das angibt, dass ein oder mehrere freie Speicherblöcke in der Speicherblockgruppe, die mit diesem ersten Datenelement zusammenhängt, vorliegen, aus der ersten Datenentität,
- Auswählen einer derartigen zweiten Datenentität, die mit der Speicherblockgruppe zusammenhängt, die mit dem gesuchten ersten Datenelement zusammenhängt, aus den zweiten Datenentitäten,
- Auswählen eines derartigen zweiten Datenelements, das einen Indikator eines freien Speicherblocks trägt, aus der ausgewählten zweiten Datenentität,
- Bilden einer ersten Adresse, die den zuzuweisenden freien Speicherblock identifiziert, zumindest zum Teil auf der Basis des gesuchten ersten Datenelements, das angibt, dass die Speicherblockgruppe mindestens einen freien Speicherblock aufweist, und des Indikators des freien Speicherblocks, und
- Aktualisieren des gesuchten ersten Datenelements, um einer Situation zu entsprechen, in der die Anzahl von freien Speicherblöcken in der Speicherblockgruppe, die mit dem gesuchten ersten Datenelement zusammenhängt, um eins abgenommen hat.

15. Computerprogramm nach Anspruch 14, wobei das Computerprogramm weiterhin computerausführbare Anweisungen umfasst, die bei Ausführung den programmierbaren Prozessor zum Durchführen der folgenden Aktionen als Reaktion auf ein Empfangen einer zweiten Adresse, die einen Speicherblock identifiziert, der aus einer Zuweisung freigegeben werden soll, steuern:

- Bestimmen der Speicherblockgruppe, die den freizugebenden Speicherblock enthält,
- Aktualisieren des ersten Datenelements, das mit der bestimmten Speicherblockgruppe zusammenhängt, um einer Situation zu entsprechen, in der die Anzahl von freien Speicherblöcken in der bestimmten Speicherblockgruppe um eins zugenommen hat,
- Bestimmen eines Indikators, der den freizugebenden Speicherblock aus den Speicherblöcken der bestimmten Speicherblockgruppe identifiziert,
- Bestimmen eines derartigen zweiten Datenelements, das keinen Indikator enthält, der einen beliebigen Speicherblock, der frei ist und der sich von dem freizugebenden Speicherblock unterscheidet, aus den Speicherblöcken der bestimmten Speicherblockgruppe identifiziert, aus der zweiten Datenentität, die mit der bestimmten Speicherblockgruppe zusammenhängt, und
- Einstellen des bestimmten zweiten Datenelements, um den Indikator zu enthalten, der den freizugebenden Speicherblock aus den Speicherblöcken der bestimmten Speicherblockgruppe identifiziert.

## Revendications

1. Dispositif pour commander une mémoire organisée pour contenir une pluralité de groupes de blocs de mémoire contenant chacun une pluralité de blocs de mémoire, le dispositif comprenant un processeur (201) pour recevoir une demande d'allocation d'un bloc de mémoire libre parmi les blocs de mémoire de la mémoire, dans lequel le processeur est configuré pour:

- conserver une première entité de données (101) contenant les premiers éléments de données de sorte qu'il existe un premier élément de données pour chacun des groupes de blocs de mémoire, chacun des premiers éléments de données indiquant le nombre de blocs de mémoire libres dans le groupe de blocs de mémoire liés à ce premier élément de données, et
- conserver les secondes entités de données (102-105) de sorte qu'il existe une deuxième entité de données pour chacun des groupes de blocs de mémoire et chacune des secondes entités de données contient des seconds éléments de données de sorte que le nombre des seconds éléments de données dans chaque deuxième entité de données soit au moins le nombre des blocs de mémoire dans le groupe de blocs de mémoire liés à cette seconde entité de données, et, lorsqu'un ou plusieurs des blocs de mémoire du groupe de blocs de mémoire liés à cette deuxième entité de données sont libres, un ou plusieurs les seconds éléments de données de cette seconde entité de données contiennent des indicateurs identifiant les blocs de mémoire libres parmi les blocs de mémoire du groupe de blocs de mémoire liés à ces secondes entités de données,

dans lequel le processeur est configuré pour exécuter les actions suivantes en réponse à la réception de la demande d'allocation d'un bloc de mémoire libre:

- rechercher, à partir de la première entité de données, un tel premier élément de données qui indique qu'il existe un ou plusieurs blocs de mémoire libres dans le groupe de blocs de mémoire liés à ce premier élément de données,
- sélectionner, parmi les secondes entités de données, une telle seconde donnée entité qui est liée au groupe de blocs de mémoire lié au premier élément de données recherché,
- sélectionner, dans la seconde entité de données sélectionnée, un tel second élément de données qui porte un indicateur d'un bloc de mémoire libre,
- former une première adresse identifiant le bloc de mémoire libre à allouer au moins en partie sur la base du premier élément de données recherché qui indique le groupe de blocs de mémoire ayant au moins un bloc de mémoire libre et l'indicateur du bloc de mémoire libre, et
- mettre à jour le premier élément de données recherché pour correspondre à une situation dans laquelle le nombre de blocs de mémoire libres dans le groupe de blocs de mémoire liés au premier élément de données recherché a diminué de un.

2.  Dispositif selon la revendication 1, dans lequel le processeur est configuré pour effectuer les actions suivantes en réponse à la réception d'une deuxième adresse identifiant un bloc mémoire à libérer de l'allocation:

- déterminer le groupe de blocs de mémoire qui contient le bloc de mémoire à libérer,
- mettre à jour le premier élément de données lié au groupe de blocs de mémoire déterminé pour correspondre à une situation dans laquelle le nombre de blocs de mémoire libres dans le groupe de blocs de mémoire déterminé a augmenté de un,
- déterminer un indicateur qui identifie, parmi les blocs de mémoire du groupe de blocs de mémoire déterminé, le bloc de mémoire à libérer,
- déterminer, à partir de la seconde entité de données liée au groupe de blocs de mémoire déterminé, un tel second élément de données qui ne contient pas d'indicateur identifiant, parmi les blocs de mémoire du groupe de blocs de mémoire déterminé, tout bloc de mémoire libre et qui est autre que le bloc mémoire à libérer, et
- établir le deuxième élément de données déterminé pour contenir l'indicateur qui identifie, parmi les blocs de mémoire du groupe de blocs de mémoire déterminé, le bloc de mémoire à libérer.

3.  Dispositif selon la revendication 1 ou 2, dans lequel le processeur est configuré pour:

- conserver chacune des secondes entités de données sous la forme d'une liste ordonnée des seconds éléments de données appartenant à la deuxième entité de données concernée,
- sélectionner, à partir de la deuxième entité de données sélectionnée, le N-ème second élément de données à la fin ou au début de la liste ordonnée de manière à sélectionner, à partir de la deuxième entité de données sélectionnée, un tel deuxième élément de données qui porte l'indicateur du bloc de mémoire libre, N étant le nombre de blocs de mémoire libres dans le groupe de blocs de mémoire liés au premier élément de données recherché.

4.  Dispositif selon une quelconque des revendications 1 à 3, dans lequel le processeur est configuré pour effectuer les actions suivantes afin de rechercher, à partir de la première entité de données, un tel premier élément de données qui indique qu'il y en a un ou plusieurs libres blocs de mémoire dans le groupe de blocs de mémoire liés à ce premier élément de données:

- conserver la première entité de données comme un anneau logique de sorte que chaque premier élément de données ait un prédécesseur et un successeur dans l'anneau logique,
- conserver un pointeur indiquant, à partir de l'anneau logique, un tel premier élément de données qui se rapporte au groupe de blocs de mémoire qui contient un bloc de mémoire précédemment alloué, et
- poursuivre, à partir du premier élément de données indiqué par le pointeur, sur l'anneau logique tant qu'un tel premier élément de données indiquant qu'il y a un ou plusieurs blocs de mémoire libres dans le groupe de blocs de mémoire liés à ce premier élément de données est trouvé.

5.  Dispositif selon une quelconque des revendications 1 à 3, dans lequel le processeur est configuré pour effectuer les actions suivantes afin de rechercher, à partir de la première entité de données, un tel premier élément de données qui indique qu'il y a un ou plusieurs blocs de mémoire libre dans le groupe de blocs de mémoire liés à ce premier élément de données :

- conserver la première entité de données en tant que liste ordonnée de sorte que chaque premier élément de données ait un prédécesseur et/ou un successeur dans la liste ordonnée, et

- poursuivre, à partir du début de la liste ordonnée, sur la liste ordonnée tant qu'un tel premier élément de données qui indique qu'il existe un ou plus de blocs de mémoire libres dans le groupe de blocs de mémoire liés à ce premier élément de données est trouvé.

6.  Dispositif selon une quelconque des revendications 1 à 5, dans lequel le processeur est configuré pour conserver une numérotation consécutive des groupes de blocs de mémoire et une numérotation consécutive des blocs de mémoire dans chaque groupe de blocs de mémoire, et le processeur est configuré pour former la première adresse identifiant le bloc de mémoire libre à allouer selon la formule suivante:

$$\text{Addr}_1 = k_{BG1} \times S_{BG} + k_{B1} \times S_B + C,$$

où $\text{Addr}_1$ est la première adresse, $k_{BG1}$ est le numéro du groupe de blocs de mémoire lié à la première entité de données recherchée, $k_{B1}$ est le numéro du bloc de mémoire libre à allouer, $S_{BG}$ est une différence d'adresses mutuellement correspondantes de deux groupes de blocs de mémoire successifs, $S_B$ est une différence d'adresses mutuellement correspondantes de deux blocs de mémoire successifs dans le groupe de blocs de mémoire liés à la première entité de données recherchée, et C est un paramètre de commande de décalage qui est la valeur de $\text{Addr}_1$ lorsque $S_{BG} = S_B = 0$.

7.  Dispositif selon la revendication 6, dans lequel le processeur est configuré pour déterminer le numéro du groupe de blocs de mémoire, qui contient le bloc de mémoire à libérer, selon la formule suivante:

$$K_{BG2} = \text{la partie entière de} \left( \frac{Addr_2 - C}{S_{BG}} \right)$$

et pour déterminer le numéro du bloc mémoire à libérer selon la formule suivante:

$$k_{B2} = \frac{Addr_2 - k_{BG2} x S_{BG} - C}{S_B},$$

où $\text{Addr}_2$ est la deuxième adresse identifiant le bloc de mémoire à libérer, $k_{BG2}$ est le numéro du groupe de blocs de mémoire qui contient le bloc de mémoire à libérer, et $k_{B2}$ est le numéro du bloc de mémoire à libérer.

8.  Dispositif selon une quelconque des revendications 1 à 7, dans lequel le processeur est configuré pour:

- conserver la première entité de données de sorte que la première entité de données contienne 48 premiers éléments de données contenant chacun quatre bits, et
- conserver les secondes entités de données de sorte que chaque seconde entité de données comprenne 15 seconds éléments de données dont chacun contient quatre bits.

9.  Dispositif selon une quelconque des revendications 1 à 8, dans lequel le dispositif est au moins l'un des suivants: un routeur IP de protocole Internet, un commutateur Ethernet, un commutateur MPLS de commutation multiprotocole par étiquettes.

10. Procédé pour commander une mémoire organisée pour contenir une pluralité de groupes de blocs de mémoire contenant chacun une pluralité de blocs de mémoire, dans lequel le procédé comprend de :

- conserver (301) une première entité de données (101) contenant les premiers éléments de données de sorte qu'il existe un premier élément de données pour chacun des groupes de blocs de mémoire, chacun des premiers éléments de données indiquant le nombre de blocs de mémoire libres qu'il y a dans la mémoire groupe de blocs lié à ce premier élément de données, et
- conserver (302) des secondes entités de données (102-105) de sorte qu'il existe une deuxième entité de données pour chacun des groupes de blocs de mémoire et chacune des secondes entités de données contienne des seconds éléments de données de sorte que le nombre des seconds éléments de données dans chaque seconde entité de données soit au moins le nombre des blocs de mémoire dans le groupe de blocs de mémoire liés à cette seconde entité de données, et, lorsqu'un ou plusieurs des blocs de mémoire du groupe de blocs de mémoire liés à cette seconde entité de données sont libres, un ou plusieurs des seconds éléments de données de cette seconde entité de données contiennent des indicateurs identifiant les blocs de mémoire libres parmi les blocs de mémoire du groupe de blocs de mémoire liés à cette deuxième entité de données,

dans lequel le procédé comprend en outre l'exécution des actions suivantes en réponse à la réception d'une demande d'allocation d'un bloc de mémoire libre:

- rechercher (303), à partir de la première entité de données, un tel premier élément de données qui indique qu'il y a un ou plusieurs blocs de mémoire libres dans le groupe de blocs de mémoire liés à ce premier élément de données,
- sélectionner (304), parmi les secondes entités de données, une telle seconde entité de données qui est liée au groupe de blocs de mémoire lié au premier élément de données recherché,
- sélectionner (305), dans la seconde entité de données sélectionnée, un tel deuxième élément de données qui porte un indicateur d'un bloc de mémoire libre,
- former (306) une première adresse identifiant le bloc de mémoire libre à allouer au moins en partie sur la base du premier élément de données recherché qui indique le groupe de blocs de mémoire ayant au moins un bloc de mémoire libre et l'indicateur du bloc de mémoire libre, et
- mettre à jour le premier élément de données recherché pour correspondre à une situation dans laquelle le nombre de blocs de mémoire libres dans le groupe de blocs de mémoire liés au premier élément de données recherché a diminué de un.

11. Procédé selon la revendication 10, dans lequel le procédé comprend l'exécution des actions suivantes en réponse à la réception d'une seconde adresse identifiant un bloc de mémoire à libérer de l'allocation:

- déterminer (307) le groupe de blocs de mémoire qui contient les blocs de mémoire à libérer,
- mettre à jour (308) le premier élément de données lié au groupe de blocs de mémoire déterminé pour correspondre à une situation dans laquelle le nombre de blocs de mémoire libres dans le groupe de blocs de mémoire déterminé a augmenté de un,
- déterminer (309) un indicateur qui identifie, parmi les blocs de mémoire du groupe de blocs de mémoire déterminé, le bloc de mémoire à libérer,
- déterminer (310), à partir de la seconde entité de données liée au groupe de blocs de mémoire déterminé, un tel deuxième élément de données qui ne contient pas un indicateur identifiant, parmi les blocs mémoire du groupe de blocs mémoire déterminé, tout bloc mémoire libre et autre que le bloc mémoire à libérer, et
- établir (311) le deuxième élément de données déterminé pour contenir l'indicateur qui identifie, parmi les blocs de mémoire du groupe de blocs de mémoire déterminé, le bloc de mémoire à libérer.

12. Procédé selon la revendication 10 ou 11, dans lequel le procédé comprend de:

- conserver chacune des deuxièmes entités de données sous la forme d'une liste ordonnée des seconds éléments de données appartenant à la deuxième entité de données concernée,
- sélectionner, à partir de la deuxième entité de données sélectionnée, le N-ème second élément de données à partir de la fin ou du début de la liste ordonnée de manière à sélectionner, à partir de la deuxième entité de données sélectionnée, un tel deuxième élément de données qui porte l'indicateur de la bloc de mémoire libre, N étant le nombre de blocs de mémoire libres dans le groupe de blocs de mémoire liés au premier élément de données recherché.

13. Procédé selon une quelconque des revendications 10 à 12, dans lequel le procédé comprend l'exécution des actions suivantes afin de rechercher, à partir de la première entité de données, un tel premier élément de données qui indique qu'il y a un ou plusieurs blocs de mémoire libres dans le groupe de blocs de mémoire lié à ce premier élément de données :

- conserver la première entité de données comme un anneau logique de sorte que chaque premier élément de données ait un prédécesseur et un successeur dans l'anneau logique,
- conserver un pointeur indiquant, à partir de l'anneau logique, un tel premier élément de données qui se rapporte au groupe de blocs de mémoire qui contient un bloc de mémoire précédemment alloué, et

- poursuivre, à partir du premier élément de données indiqué par le pointeur, sur l'anneau logique tant qu'un tel premier élément de données qui indique qu'il y a un ou plusieurs blocs de mémoire libres dans le groupe de blocs de mémoire liés à ce premier élément de données est trouvé.

**14.** Programme informatique pour commander une mémoire organisée pour contenir une pluralité de groupes de blocs de mémoire contenant chacun une pluralité de blocs de mémoire, le programme informatique comprend des instructions exécutables par ordinateur qui, une fois exécutées, peuvent commander un processeur programmable pour

- conserver une première entité de données (101) contenant les premiers éléments de données de sorte qu'il existe un premier élément de données pour chacun des groupes de blocs de mémoire, chacun des premiers éléments de données indiquant le nombre de blocs de mémoire libres dans le groupe de blocs de mémoire liés à ce premier élément de données, et

- conserver les deuxièmes entités de données (102-105) de sorte qu'il existe une deuxième entité de données pour chacun des groupes de blocs de mémoire et chacune des deuxièmes entités de données contient des deuxièmes éléments de données de sorte que le nombre des seconds éléments de données dans chaque seconde entité de données sont au moins le nombre des blocs de mémoire dans le groupe de blocs de mémoire liés à cette deuxième entité de données, et, lorsqu'un ou plusieurs des blocs de mémoire du groupe de blocs de mémoire liés à ces secondes données sont libres, un ou plusieurs des deuxièmes éléments de données de cette seconde entité de données contiennent des indicateurs identifiant les blocs de mémoire libres parmi les blocs de mémoire du groupe de blocs de mémoire liés à cette deuxième entité de données,

dans lequel le programme informatique comprend des instructions exécutables par ordinateur qui, une fois exécutées, commandent le processeur programmable pour effectuer les actions suivantes en réponse à la réception d'une demande d'allocation d'un bloc de mémoire libre:

- rechercher, à partir de la première entité de données, un tel premier élément de données qui indique qu'il existe un ou plusieurs blocs de mémoire libres dans le groupe de blocs de mémoire liés à ce premier élément de données,

- sélectionner, parmi les deuxièmes entités de données, une telle deuxième entité de données qui est liée au groupe de blocs de mémoire lié au premier élément de données recherché,

- sélectionner, à partir de la deuxième entité de données sélectionnée, un tel deuxième élément de données qui porte un indicateur d'un bloc de mémoire libre,

- former une première adresse identifiant le bloc de mémoire libre à allouer au moins en partie sur la base du premier élément de données recherché qui indique le groupe de blocs de mémoire ayant au moins un bloc de mémoire libre et l'indicateur du bloc de mémoire libre, et

- mettre à jour le premier élément de données recherché pour correspondre à une situation dans laquelle le nombre de blocs de mémoire libres dans le groupe de blocs de mémoire liés au premier élément de données recherché a diminué de un.

**15.** Programme informatique selon la revendication 14, dans lequel le programme informatique comprend en outre des instructions exécutables par ordinateur qui, une fois exécutées, commandent le processeur programmable pour effectuer les actions suivantes en réponse à la réception d'une deuxième adresse identifiant un bloc de mémoire à libérer de l'allocation:

- déterminer le groupe de blocs de mémoire qui contient le bloc de mémoire à libérer,

- mettre à jour le premier élément de données lié au groupe de blocs de mémoire déterminé pour correspondre à une situation dans laquelle le nombre de blocs de mémoire libres dans le groupe de blocs de mémoire déterminé a augmenté de un,

- déterminer un indicateur qui identifie, parmi les blocs de mémoire du groupe de blocs de mémoire déterminé, le bloc de mémoire à libérer,

- déterminer, à partir de la deuxième entité de données liée au groupe de blocs de mémoire déterminé, un tel second élément de données qui ne contient pas un indicateur identifiant, parmi les blocs de mémoire du groupe de blocs de mémoire déterminé, tout bloc de mémoire libre et autre que le bloc de mémoire à libérer, et

- définir le deuxième élément de données déterminé pour contenir l'indicateur que identifie, parmi les blocs de mémoire du groupe de blocs de mémoire déterminé, le bloc de mémoire à libérer.

Figure 1

**Figure 2**

START

301 — Maintain a first data entity that indicates the number of free memory blocks in each memory block group.

302 — For each memory block group, maintain a second data entity that indicates which of the memory blocks of the concerned memory block group are free.

YES
A
(next sheet)

Request to allocate received?

NO
A
(next sheet)

303 — Search, from the first data entity, a first data item that indicates that there are one or more free memory blocks in the memory block group related to this first data item.

304 — Select a second data entity which is related to the memory block group related to the searched first data item.

305 — Select, from the selected second data entity, such second data item which carries an indicator of a free memory block.

306 — Form an address identifying the free memory block at least partly on the basis of (i) the searched first data item and (ii) the indicator of the free memory block.

Figure 3

**A** (prev. sheet)

YES — **Received an address of a memory block to be released?** — NO

307 — Determine the memory block group which contains the memory block to be released.

308 — Update the first data item related to the determined memory block group by adding one to the number of free memory blocks in the determined memory block group.

309 — Determine an indicator which identifies, from the determined memory block group, the memory block to be released.

310 — Determine, from the second data entity related to the determined memory block group, such second data item which does not contain an indicator of any other free memory block.

311 — Set the determined second data item to contain the indicator which identifies, from among the memory blocks of the determined memory block group, the memory block to be released.

**Figure 3, Cont'd**

**EP 2 624 137 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5784698 A
- US 2005132162 A1
- EP 2075698 A1
- WO 0231660 A2
- US 5875477 A